# EUROPÄISCHE PATENTSCHRIFT

(11) **EP 1 060 276 B1**
(45) Veröffentlichungstag und Bekanntmachung des Hinweises auf die Patenterteilung: **15.12.2004**
(21) Anmeldenummer: 99907585.6
(22) Anmeldetag: 02.03.1999
(51) Int. Cl.: C21D 9/30, C21D 1/10

(54) **VORRICHTUNG ZUM HÄRTEN ZYLINDRISCHER LAGERSTELLEN EINER WELLE**
DEVICE FOR HARDENING CYLINDRICAL BEARING POINTS OF A SHAFT
DISPOSITIF POUR DURCIR DES ZONES D'APPUI CYLINDRIQUES D'UN ARBRE

(30) Priorität: 02.03.1998 DE 19808763
(43) Veröffentlichungstag der Anmeldung: 20.12.2000
(73) Patentinhaber: SMS Elotherm GmbH, 42897 Remscheid (DE)
(72) Erfinder: GEZARZICK, Waldemar, D-42855 Remscheid (DE); HACKENBERGER, Ludwin, D-51519 Odenthal (DE); LEISNER, Hans-Jürgen, D-42855 Remscheid (DE)
(74) Vertreter: Simons, Johannes, Dipl.-Ing.
(86) Internationale Anmeldenummer: PCT/EP1999/001348
(87) Internationale Veröffentlichungsnummer: WO 1999/045157

(56) Entgegenhaltungen:
- EP-A- 0 374 373
- DE-A- 1 483 016
- DE-C- 3 623 119
- DE-C- 4 228 093
- DE-C- 19 530 430
- GB-A- 1 071 490
- US-A- 5 157 231
- PATENT ABSTRACTS OF JAPAN vol. 015, no. 445 (C-0884), 13. November 1991 -& JP 03 188221 A (FUJI DENSHI KOGYO KK), 16. August 1991

## Beschreibung

Die Erfindung betrifft eine Vorrichtung zum Härten zylindrischer Lagerstellen einer Welle, bei der mindestens einer der Übergangsradien zu den angrenzenden Wellenteilen hinterstochen ausgebildet ist. Derartige Vorrichtungen werden beispielsweise eingesetzt, um Hubzapfen einer Kurbelwelle zu härten, bei denen die Hubzapfen seitlich von Wangen begrenzt sind. Dabei sind besondere Maßnahmen erforderlich, um zu gewährleisten, daß auch die hinterstochenen Übergangsradien im für ein ordnungsgemäßes Härten ausreichenden Maße erwärmt werden.

Zu diesem Zweck weisen bei einer aus der deutschen Auslegeschrift DE-AS 14 83 016 bekannten induktiv arbeitenden Vorrichtung der voranstehend genannten Art die Heizleiter eines Induktors die Form eines Parallelogramms auf, wobei die beiden parallelen Seiten einen unterschiedlichen Abstand besitzen. Auf diese Weise kann der Induktor zunächst mit seiner schmalen Seite in den zwischen den Wellenteilen freibleibenden Raum eingefahren werden, bis er auf der zu härtenden Lagerstelle aufsitzt. Anschließend werden die Heizleiter durch Verdrehen des Induktors mit ihrer breiten Seite zur Anlage an die Übergangsradien gebracht. Dabei wird der Induktor federnd gegen isolierte Anlagestücke gedrückt.

Der Vorzug der aus der DE-AS 14 83 016 bekannten Vorrichtung besteht darin, daß die Induktoren automatisch auf die zu härtende Lagerstelle aufgesetzt und in ihre Arbeitsposition gebracht werden können. Gleichzeitig ist die Form der Heizschleifen derart, daß sie problemlos im Kreislauf mit Kühlmittel durchströmt werden können. Auf diese Weise kann eine Überhitzung des Schleifenmaterials sicher vermieden werden. Nachteilig ist bei der bekannten Vorrichtung jedoch, daß der apparative Aufwand für das Einführen und Drehen des Induktors erheblich ist. Darüber hinaus zeigt sich in der Praxis, daß es bei der bekannten Vorrichtung schwierig ist, einen konstanten Abstand zwischen Werkstück und Induktor einzuhalten. Dies führt zu einer Verschlechterung des Bearbeitungsergebnisses. Ein weiterer wesentlicher Nachteil der bekannten Vorrichtung besteht darin, daß jeder Induktor die zu härtende Lagerstelle um weniger als 90° umgreift. Dies bringt das Problem mit sich, daß nur im begrenzten Maße Erwärmungsenergie in die Lagerstelle eingebracht werden kann. Es hat sich herausgestellt, daß diese Energiemenge häufig nicht ausreicht, um ein ordnungsgemäßes Härteergebnis zu gewährleisten.

Zur Beseitigung der voranstehend erläuterten Probleme ist in der deutschen Patentschrift DE 36 23 119 C1 vorgeschlagen worden, zum induktiven Erwärmen der zu härtenden Lagerstelle einen in zwei Hälften geteilten Induktor zu verwenden. Eine der Induktorhälften ist fest mit einer Stelleinheit verbunden, während die zweite Induktorhälfte schwenkbar an der feststehenden befestigt ist. Die Stelleinheit umfaßt dabei eine Einrichtung zum Zustellen der Induktoren auf die zu härtende Lagerstelle, eine zweite Stelleinrichtung zum Bewegen des Induktors achsparallel zur Längsachse der Welle und eine dritte Stelleinrichtung zum Verschwenken der schwenkbaren Induktorhälfte in ihre Arbeitsposition. Mittels der Stelleinheit können die Hälften des Induktors gemeinsam in eng aneinander liegender Stellung auf die zu härtende Lagerfläche zugestellt werden, bis die Induktoren auf der Lagerfläche aufsitzen. Anschließend wird zunächst die feststehende Induktorenhälfte in ihre Arbeitsposition gebracht, indem sie gemeinsam mit der schwenkbaren Induktorhälfte achsparallel zur Längsachse der Welle bewegt wird. Daraufhin wird die schwenkbare Induktorhälfte in Richtung des ihr zugeordneten Übergangsradius verschwenkt.

Bei der aus der DE 36 23 119 C1 bekannten Vorrichtung ist es zwar einfacher als beim älteren Stand der Technik möglich, den Induktor auf die zu härtende Lagerstelle aufzusetzen und seine Indutkorhälften in Arbeitsposition zu bringen. Der hierzu erforderlich apparative Aufwand ist jedoch nach wie vor erheblich. Darüber hinaus ist es schwierig, die schwenkbare Induktorhälfte in eine optimale Arbeitsposition zu bringen. Dies führt ebenso wie der Umstand, daß bei der bekannten Vorrichtung die Heizleiter nur mit einer Lücke im Mittelbereich die zu härtende Lagerstelle überstreichen, zu einem verschlechterten Arbeitsergebnis. Schließlich erweist sich sowohl die elektrische Verbindung als auch die Kühlmittelversorgung der schwenkbaren Induktorhälfte als störanfällig.

Die Aufgabe der Erfindung besteht darin, ausgehend von dem voranstehend erläuterten Stand der Technik, eine Vorrichtung der eingangs genannten Art zu schaffen, bei welcher mit verringertem apparativen Aufwand ein verbessertes Arbeitsergebnis erzielt wird.

Diese Aufgabe wird erfindungsgemäß durch eine Vorrichtung zum Härten zylindrischer Lagerstellen einer Welle, bei der mindestens einer der Übergangsradien zu den angrenzenden Wellenteilen hinterstochen ausgebildet ist, gelöst, die mit einem Paar von induktiv arbeitenden Erwärmungseinheiten, die jeweils mindestens aus einem Induktor, der zwei beabstandet zueinander angeordnete und jeweils in Umfangsrichtung der Lagerstelle verlaufende Heizleiteräste aufweist, gebildet und mit einer Stromversorgung verbunden sind, wobei ein äußerer Heizleiterast des Induktors der einen Erwärmungseinheit dem ersten Übergangsradius und ein äußerer Heizleiterast des Induktors der anderen Erwärmungseinheit dem zweiten Übergangsradius zugeordnet ist, während die jeweils inneren Heizleiteräste der Induktoren zueinander benachbart angeordnet sind, mit einer Stelleinrichtung, die dazu vorgesehen ist, die Induktoren gleichzeitig aus radialer Richtung auf die zu härtende Lagerstelle zuzustellen, bis die Induktoren auf der Lagerstelle aufsitzen, wobei in diesem Zustand die Heizleiteräste die Lagerstelle zumindest teilweise umgreifen und wobei die inneren Heizleiteräste der beiden Induktoren einander in Umfangsrichtung betrachtet in einem Überlappungsbereich überdecken, ohne einander zu berühren, und mit einer zweiten Stelleinrichtung ausgestattet ist, welche dazu vorgesehen ist, mindestens den dem hinterstochenen Radius zugeordneten Induktor nach dem Aufsetzen auf die Lagerstelle durch eine achsparallel zur Längsachse der Welle gerichtete Bewegung so lange in Richtung des hinterstochenen Übergangsradius zu bewegen, bis sein äußerer Heizleiterast in den jeweiligen Übergangsradius eingefahren ist. Vorzugsweise sind die Erwärmungseinheiten jeweils mit mindestens einer Stromversorgung ausgestattet.

Die erfindungsgemäße Vorrichtung ist mit zwei voneinander unabhängigen Erwärmungseinheiten ausgestattet, von denen jede einen Induktor und zumindest die zugehörige Stromversorgungseinrichtung umfaßt. Auf diese Weise kann auf störungsanfällige Anschlüsse der elektrischen Verbindungen der Induktoren und der ihnen jeweils zugeordneten Erwärmungseinheit sowie der Kühlmittelversorgung verzichtet werden. Auch können die von den Erwärmungseinheiten gegebenenfalls zusätzlich getragenen Abschreckbrausen problemlos mit Abschreckfluid versorgt werden.

Die Abmessungen und die äußere Form der Induktoren der beiden Erwärmungseinheiten sind bei der erfindungsgemäßen Vorrichtung derart aufeinander abgestimmt, daß je nach Anwendungsfall ein einzelner der Induktoren oder beide Induktoren gemeinsam und gleichzeitig in eine eng benachbarten Stellung auf die Welle zugestellt werden können. In dieser Stellung ist die gesamte in Achsrichtung der Welle gemessene Breite beider Induktoren kleiner als die Breite des freien Raums, welcher zwischen den an die zu härtende Lagerstelle angrenzenden Wellenteile vorhanden ist, so daß während des Einfahrens der Induktoren in den freien Raum keine Gefahr einer Kollision besteht.

Das Zustellen der Induktoren auf die Lagerstelle kann aufgrund der Unabhängigkeit der Erwärmungseinheiten mit herkömmlichen, einfachen Stelleinrichtungen mit hoher Stellgenauigkeit erfolgen. Ebenso herkömmliche, genau arbeitende Stelleinrichtungen können verwendet werden, um die Induktoren in einer achsparallel zur Längsachse der Welle gerichteten Bewegung in ihre endgültige Arbeitsposition zu fahren. In dieser Position sitzen die äußeren Heizleiteräste der Induktoren in den ihnen zugeordneten Übergangsradien.

Aufgrund der Unabhängigkeit der Erwärmungseinheiten kann darüber hinaus mittels einfachster Maßnahmen, beispielsweise durch die Verwendung von Gleitschuhen, problemlos sichergestellt werden, daß die Induktoren während der Bearbeitung ihre Arbeitsposition einhalten. Schon auf diese Weise ist das Ergebnis der Bearbeitung im Bereich der Übergangsradien bei einer erfindungsgemäß ausgebildeten Vorrichtung gegenüber herkömmlichen Vorrichtungen dieser Art erheblich verbessert.

Da zusätzlich die nebeneinander angeordneten inneren Heizleiteräste beider Induktoren derart gestaltet sind, daß sie einander in Umfangsrichtung gesehen überlappen, ohne sich dabei zu berühren, ist sichergestellt, daß gleichzeitig mit dem Bereich der Übergangsradien auch die gesamte Oberfläche der zu härtenden Lagerstelle in einem für die jeweils geforderte Härtung ausreichendem Maße erwärmt wird.

Vorzugsweise ist die in Achsrichtung der Welle gemessene Breite des Überlappungsbereichs bei der erfindungsgemäßen Vorrichtung größer als die Summe der Tiefen der Übergangsradien. Auf diese Weise ist sichergestellt, daß die inneren Heizleiteräste beider Induktoren auch in der Arbeitsposition einander überlappen. Eine dies ermöglichende Ausgestaltung der Erfindung ist dadurch gekennzeichnet, daß die benachbart zueinander angeordneten Heizleiteräste bezogen auf die den Übergangsradien zugeordneten Heizleiterästen schräg angeordnet sind.

Eine besonders bevorzugte Ausgestaltung der Erfindung ist dadurch gekennzeichnet, daß die Induktoren die zu härtende Lagerstelle um mehr als 90°, vorzugsweise um mehr als 140°, umgreifen.

Abhängig von der in die Lagerfläche einzubringenden Wärmeleistung kann es sinnvoll sein, wenn die benachbart zueinander angeordneten inneren Heizleiteräste kürzer als die den Übergangsradien jeweils zugeordneten äußeren Heizleiteräste der Induktoren sind.

Eine bevorzugte, praxisgerechte Ausgestaltung der Erfindung ist dadurch gekennzeichnet, daß die Heizleiteräste jeweils in zwei Teilstücke geteilt sind. Auf diese Weise können beispielsweise Gleitschuhe problemlos an den Stellen positioniert werden, an denen sie für eine optimale Führung der Induktoren während der Bearbeitung erforderlich sind.

Eine weitere vorteilhafte Ausgestaltung der Erfindung ist dadurch gekennzeichnet, daß die in radialer Richtung wirksame Stelleinrichtung dazu vorgesehen ist, die Erwärmungseinheiten einschließlich der Induktoren als Ganzes zu bewegen. Ebenso kann es vorteilhaft sein, wenn die in axialer Richtung wirksame Stelleinrichtung dazu vorgesehen ist, die Erwärmungseinheiten einschließlich der Induktoren als Ganzes zu bewegen. Auf diese Weise kann einhergehend mit einer Erhöhung der Betriebssicherheit der Aufwand für die Verbindungen zwischen den Induktoren und der jeweiligen Stromversorgungs- und Kühlmittelversorgungseinrichtung weiter vermindert werden.

Die erfindungsgemäße Vorrichtung ist besonders zum Härten der seitlich von Wangen begrenzten Hubzapfen einer Kurbelwelle geeignet, bei welcher die Übergangsradien in die Wangen eingestochen sind und bei welcher aufgrund der in der Regel großen Höhe der Wangen der für das Einfahren der Induktoren zur Verfügung stehende freie Raum besonders beschränkt ist.

Nachfolgend wird die Erfindung anhand einer ein Ausführungsbeispiel darstellenden Zeichnung näher erläutert. Es zeigen schematisch:
- Fig. 1: zwei zum Härten einer Lagerstelle einer Kurbelwelle eingesetzte Erwärmungseinheiten in einer ersten Arbeitsstellung in einem Längsschnitt;
- Fig. 2: die Erwärmungseinheiten in einer zweiten Arbeitsstellung in einer Fig. 1 entsprechenden Darstellung;
- Fig. 3: die Erwärmungseinheiten in einer dritten Arbeitsstellung in einer Fig. 1 entsprechenden Darstellung;

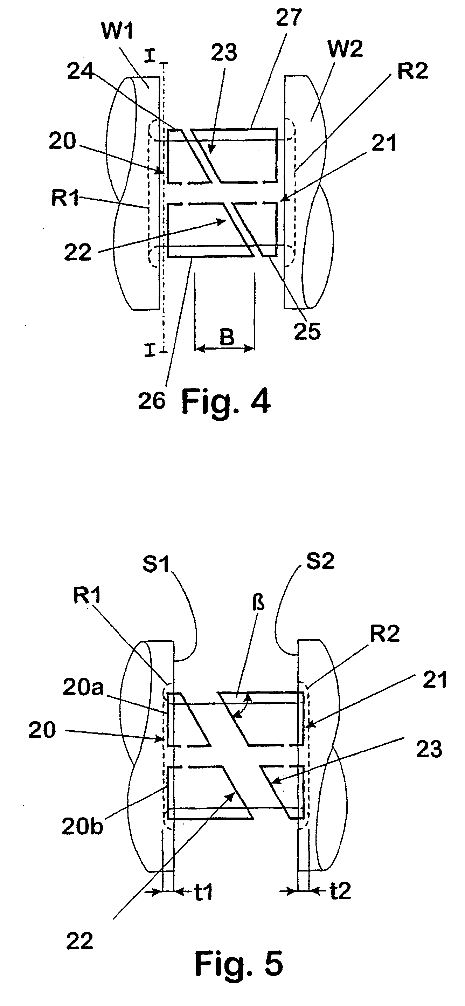

- Fig. 4: die Lagerstelle mit den Heizleitern zweier aufgesetzter Induktoren in der zweiten Arbeitsstellung der Erwärmungseinheiten;
- Fig. 5: die Lagerstelle mit den Heizleitern der aufgesetzten Induktoren in der dritten Arbeitsstellung der Erwärmungseinheiten;

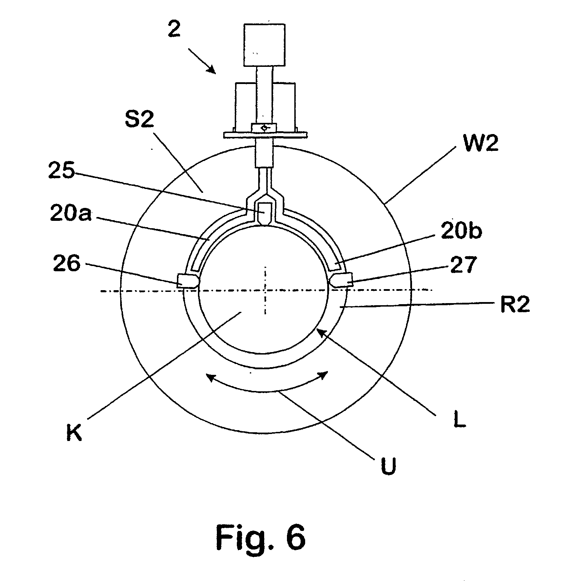

- Fig. 6: die Lagerstelle im Schnitt entlang der in Fig. 4 eingetragenen Schnittlinie I-I.

Bei der zu härtenden Lagerstelle L der Kurbelwelle K kann es sich beispielsweise um einen Hubzapfen handeln, der seitlich durch Wangen W1, W2 begrenzt ist. Die Übergangsradien R1, R2, in denen die Lagerfläche L in die Seitenfläche S1, S2 der Wangen W1, W2 übergeht, sind dabei als in die Wangen W1, W2 eingestochene Ringnuten ausgebildet.

Die zum Härten der Lagerstelle L eingesetzten Erwärmungseinheiten 1,2 umfassen jeweils einen Induktor 3,4 und eine Stromversorgungseinrichtung 5,6, über die die Induktoren 3,4 mit der erforderlichen Leistung versorgt werden. Darüber hinaus sind die Erwärmungseinheiten 1,2 mit nicht dargestellten Anschlüssen für eine Kühlmittelversorgung ausgestattet. Alternativ zu jeweils eigenen Stromversorgungen 5,6 können die Erwärmungseinheiten 1,2 auch über eine gemeinsame Versorgung mit der erforderlichen Leistung versehen werden. Ebenso können jeweils mehrere Strom- bzw. Leistungsversorgungen vorgesehen sein, um die notwendige Leistung bereitzustellen.

Die voranstehend erwähnten Teile der Erwärmungseinheiten 1,2 werden jeweils von einem Tisch 7,8 getragen, der jeweils an einem Gehänge 9,10 aufgehängt ist. Das Gehänge ist gelenkig mit jeweils einer ersten Stelleinrichtung 11,12 verbunden, über welche die Erwärmungseinheiten 1,2 aus radialer Richtung R auf die zu härtende Lagerstelle L zugestellt werden können. Die Gehänge 9,10 und die Stelleinrichtungen 11,12 sind derart ausgebildet, daß die Erwärmungsheiten 1,2 den räumlichen Bewegungen der Lagerstelle L während eines Umlaufs der Kurbelwelle K folgen können. Zusätzlich sind die Stromversorgungseinheiten 5,6 und die mit ihnen jeweils verbundenen Induktoren 3,4 über jeweils eine achsparallel zur Längsachse X der Kurbelwelle K gerichtete Bewegung A durchführende zweite Stelleinrichtung 13,14 auf dem jeweiligen Tisch 7,8 abgestützt.

Die Induktoren 3,4 sind in Achsrichtung der Kurbelwelle K nebeneinander angeordnet, wobei der Induktor 3 dem Übergangsradius R1 und der Induktor 4 dem Übergangsradius R2 zugeordnet ist. Die Induktoren 3,4 weisen jeweils einen ersten und einen zweiten Heizleiterast 20,22 bzw. 21,23 auf. Diese Heizleiteräste 20-23 umgreifen die Lagerstelle L um mehr als 140° jedoch weniger als 180°. Die jeweils äußeren Heizleiter 20 bzw. 21 der Induktoren 3,4 sind dem jeweiligen Übergangsradius R1 bzw. R2 zugeordnet, während die jeweils inneren Heizleiteräste 22,23 benachbart zueinander angeordnet sind.

Die jeweiligen äußeren und inneren Heizleiteräste 20,21 bzw. 22,23 der Induktoren 3,4 sind jeweils über unterschiedlich lange Verbindungsäste 24,26, bzw. 25,27 miteinander verbunden. Die zueinander benachbarten inneren Heizleiteräste 22,23 verlaufen auf diese Weise parallel zueinander und sind bezogen auf die äußeren Heizleiteräste 20,21 schräg ausgerichtet. Sie schließen mit dem jeweils längeren der Verbindungsäste 26,27 einen spitzen Winkel ß ein. Auf diese Weise ist ein Überlappungsbereich B ausgebildet, innerhalb dessen die Heizleiteräste 22,23 in Umfangsrichtung U der Lagerstelle L gesehen einander überlappen, ohne einander zu berühren. Die in Achsrichtung der Kurbelwelle K gemessene Breite des Überlappungsbereichs B ist dabei größer als die Summe der Tiefen t1, t2 der hinterstochenen Übergangsradien R1, R2. Die Heizleiteräste 20-23 sind jeweils in zwei Teiläste 20a,20b geteilt. Auf diese Weise ist im mittleren Bereich der Induktoren 3,4 ein Raum ausgebildet. Dieser Raum nimmt von den Induktoren 3,4 jeweils getragene, als Gleitschuhe wirkende Verbindungsäste 25 auf. Entsprechende als Gleitschuhe Wirkende Verbindungsäste 26, 27 sind im Bereich der unteren Enden der Heizleiteräste 20-23 positioniert.

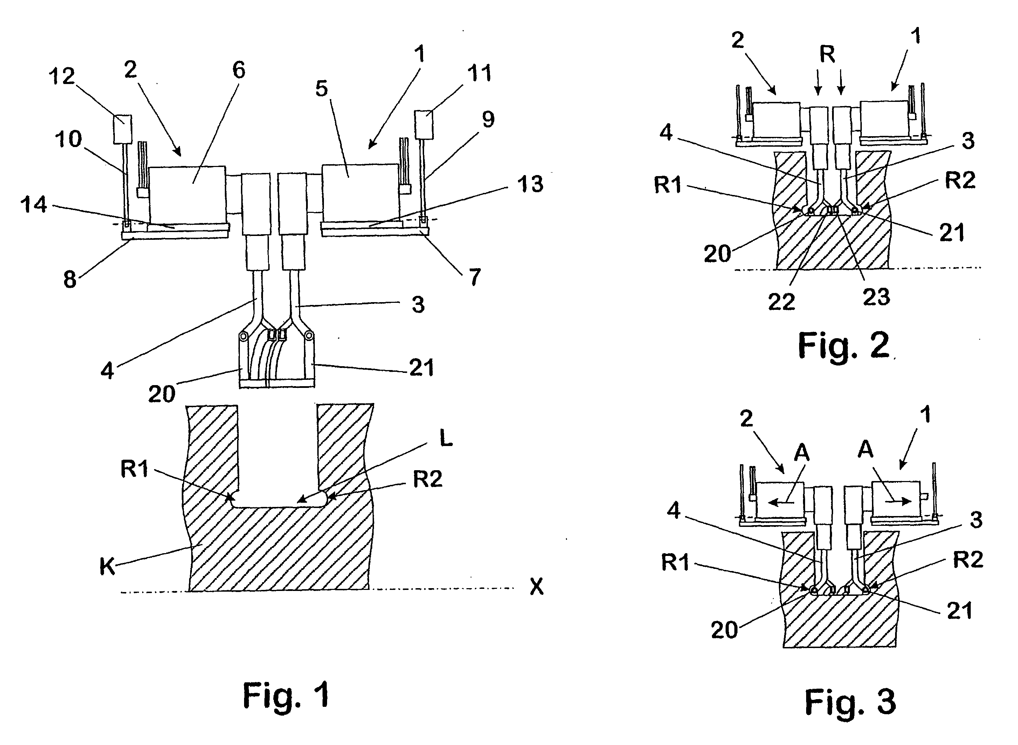

Vor dem Absenken auf die Lagerstelle L werden die Induktoren 3,4 mittels der Stelleinrichtungen 13,14 gemeinsam mit den ihnen jeweils zugeordneten Stromversorgungseinrichtungen 5,6 in eine eng benachbarte Stellung gebracht (Fig. 1). In dieser Stellung ist die Gesamtbreite der Induktoren 3,4 kleiner als die Breite zwischen den Wangen W1,W2 des verbleibenden freien Raums. Anschließend werden die Erwärmungseinheiten 1,2 gleichzeitig mittels der Stelleinrichtung 11,12 aus radialer Richtung R auf die Lagerstelle L abgesenkt, bis die Induktoren 3,4 auf ihr sitzen (Fig. 2). In dieser Stellung sind die Induktoren 3,4 über die Gleitschuhe 25-27 auf der Lagerstelle L abgestützt und geführt. Zuletzt werden die Induktoren 3,4 mit den zugehörigen Stromversorgungseinrichtungen 5,6 durch eine achsparallel zur Längsachse der Kurbelwelle K gerichtete Bewegung A mittels der jeweiligen Stelleinrichtung 13,14 auseinander bewegt, bis die äußeren Heizleiter 20,21 in den ihnen jeweils zugeordneten Übergangsradien R1,R2 sitzen (Fig. 3).

Dann wird die Härtung der Lagerfläche L und der Übergangsradien R1, R2 in bekannter Weise durchgeführt. Nach Beendigung des Härtevorgangs werden die Induktoren 3,4 in umgekehrter Schrittfolge von der Lagerstelle L abgehoben, bis die Ausgangsstellung wieder erreicht ist.

## Patentansprüche

1. Vorrichtung zum Härtens einer zylindrischen Lagerstelle (L) einer Welle (K), bei der mindestens einer der Übergangsradien (R1, R2) zu den angrenzenden Wellenteilen (W1, W2) hinterstochen ausgebildet ist,
- mit einem Paar von induktiv arbeitenden Erwärmungseinheiten (1,2), die jeweils mindestens aus einem Induktor (3,4), der zwei beabstandet zueinander angeordnete und jeweils in Umfangsrichtung (U) der Lagerstelle (L) verlaufende Heizleiteräste (20,22;21,23) aufweist, gebildet und mit einer Stromversorgung (5,6) verbunden sind,
- wobei ein äußerer Heizleiterast (20) des Induktors (4) der einen Erwärmungseinheit (2) dem ersten Übergangsradius (R1) und ein äußerer Heizleiterast (21) des Induktors (3) der anderen Erwärmungseinheit (1) dem zweiten Übergangsradius (R2) zugeordnet ist, während die jeweils inneren Heizleiteräste (22,23) der Induktoren (3,4) zueinander benachbart angeordnet sind,
- mit einer ersten Stelleinrichtung (11,12), die dazu vorgesehen ist, die Induktoren (3,4) gleichzeitig aus radialer Richtung (R) auf die zu härtende Lagerstelle (L) zuzustellen, bis die Induktoren (3,4) auf der Lagerstelle (L) aufsitzen,
- wobei in diesem Zustand die Heizleiteräste (20-23) die Lagerstelle (L) zumindest teilweise umgreifen und
- wobei die inneren Heizleiteräste (22,23) der beiden Induktoren (3,4) einander in Umfangsrichtung (U) betrachtet in einem Überlappungsbereich (B) überdecken, ohne einander zu berühren,
- und mit einer zweiten Stelleinrichtung (13,14), welche dazu vorgesehen ist, mindestens den dem hinterstochenen Radius (R1,R2) zugeordneten Induktor (3,4) nach dem Aufsetzen auf die Lagerstelle (L) durch eine achsparallel zur Längsachse (X) der Welle (K) gerichtete Bewegung (A) so lange in Richtung des hinterstochenen Übergangsradius (R1,R2 zu bewegen, bis sein äußerer Heizleiterast (20) in den jeweiligen Übergangsradius (R1, R2) eingefahren ist.

2. Vorrichtung nach Anspruch 1, **dadurch gekennzeichnet, daß** jede Erwärmungseinheit (1,2) mit jeweils einer Stromversorgung (5,6) ausgestattet ist.

3. Vorrichtung nach Anspruch 1, **dadurch gekennzeichnet, daß** die in Achsrichtung der Welle (K) gemessene Breite des Überlappungsbereichs (B) größer als die Summe der Tiefen (tl,t2) der Übergangsradien (R1, R2) ist.

4. Vorrichtung nach einem der voranstehenden Ansprüche, **dadurch gekennzeichnet, daß** die Induktoren (3,4) die zu härtende Lagerstelle (L) um mehr als 90° umgreifen.

5. Vorrichtung nach Anspruch 4, **dadurch gekennzeichnet, daß** die Induktoren (3,4) die Lagerstelle (L) um mehr als 140° umgreifen.

6. Vorrichtung nach einem der voranstehenden Ansprüche, **dadurch gekennzeichnet, daß** die inneren Heizleiteräste (22,23) bezogen auf die äußeren Heizleiteräste (20,21) schräg angeordnet sind.

7. Vorrichtung nach einem der voranstehenden Ansprüche, **dadurch gekennzeichnet**, daβ die inneren Heizleiteräste (22,23) kürzer als die äußeren Heizleiteräste (20, 21) der Induktoren (3,4) sind.

8. Vorrichtung nach einem der voranstehenden Ansprüche, **dadurch gekennzeichnet, daß** die Heizleiteräste (20-23) jeweils in zwei Teilstücke (20a,20b) geteilt sind.

9. Vorrichtung nach einem der voranstehenden Ansprüche, **dadurch gekennzeichnet, daß** die Erwärmungseinheiten (1,2) mindestens eine Abschreckbrause tragen.

10. Vorrichtung nach einem der voranstehenden Ansprüche, **dadurch gekennzeichnet, daß** die in radialer Richtung (R) wirksame Stelleinrichtung (11,12) dazu vorgesehen ist, die Erwärmungseinheiten (1,2) einschließlich der Induktoren (3,4) als Ganzes zu bewegen.

11. Vorrichtung nach einem der voranstehenden Ansprüche, **dadurch gekennzeichnet, daß** die in axialer Richtung wirksame Stelleinrichtung (13,14) dazu vorgesehen ist, die Erwärmungseinheiten (1,2) einschließlich der Induktoren (3,4) als Ganzes zu bewegen.

12. Verwendung einer Vorrichtung nach den Ansprüchen 1 bis 11 zum Härten der seitlich von Wangen (W1, W2) begrenzten Hubzapfen einer Kurbelwelle (K), bei der mindestens einer der Übergangsradien (R1,R2) in die Wangen (W1, W2) eingestochen ist.

## Claims

1. An apparatus for the hardening of a cylindrical bearing face (L) of a shaft (K), wherein at least one of the transitional radii (R1, R2) to the adjoining shaft portions (W1, W2) is constructed recessed, having:
- a pair of inductively operating heating units (1, 2), which are each formed at least by one inductor (3, 4) having two spaced-out heating conductor branches (20, 22; 21, 23) each extending in the peripheral direction (U) of the bearing face and which are connected to a power supply (5, 6),
- one outer heating conductor branch (20) of the inductor (4) of one heating unit (2) being associated with the first transitional radius (R1), and an outer heating conductor branch (22) of the inductor (3) of the other heating unit (1) being associated with the second transitional radius (R2), while in each case the inner heating conductor branches (22, 23) of the inductors (3, 4) are disposed adjacent one another;
- a first adjusting device (11, 12) for the purpose of adjusting the inductors (3, 4) simultaneously from the radial direction (R) on to the bearing face (L) to be hardened, until the inductors (3, 4) are applied to the bearing face (L),
- the heating conductor branches (20-23) engaging at least partially around the bearing face (L) in this state, and
- the inner heating conductor branches (22, 23) of the two inductors (3, 4), viewed in the peripheral direction (U), registering contactlessly with one another in an overlap zone (B), and
- a second adjusting device (13, 14) for the purpose of moving at least the inductor (3, 4) associated with the recessed radius (R1, R2) after application to the bearing face (L) by a movement directed axis-parallel with the longitudinal axis (X) of the shaft (K) in the direction of the recessed transitional radius (R1, R2), until its outer heating conductor branch (20) has moved into the particular transitional radius (R1, R2).

2. An apparatus according to claim 1,
**characterised in that** each heating unit (1, 2) has a power supply (5, 6).

3. An apparatus according to claim 1,
**characterised in that** measured in the axial direction of the shaft (K) the width of the overlap zone (B) is greater than the sum of the depths (t1, t2) of the transitional radii (R1, R2).

4. An apparatus according to one of the preceding claims,
**characterised in that in that** the inductors (3, 4) engage around the bearing face (L) to be hardened by more than 90°.

5. An apparatus according to claim 4,
**characterised in that** the inductors (3, 4) engage around the bearing face (L) by more than 140°.

6. An apparatus according to one of the preceding claims,
**characterised in that** the inner heating conductor branches (22, 23) are disposed at an inclination in relation to the outer heating conductor branches (20, 21).

7. An apparatus according to one of the preceding claims,
**characterised in that** the inner heating conductor branches (22, 23) are shorter than the outer heating conductor branches (20, 21) of the inductors (3, 4).

8. An apparatus according to one of the preceding claims,
**characterised in that** the heating conductor branches (20-23) are each divided into two component parts (20a, 20b).

9. An apparatus according to one of the preceding claims,
**characterised in that** the heating units (1, 2) bear at least one quenching spray.

10. An apparatus according to one of the preceding claims,
**characterised in that** the purpose of the adjusting device (11, 12) operative in the radial direction (R) is to move the heating units (1, 2), including the conductors (3, 4), as one whole.

11. An apparatus according to one of the preceding claims,
**characterised in that** the purpose of the adjusting device (13, 14) operative in the axial direction is to move the heating units (1, 2), including the inductors (3, 4), as one whole.

12. Use of an apparatus according to claims 1 to 11 for the hardening of the crankpins, bounded laterally by cheeks (W1, W2), of a crankshaft (K), wherein at least one of the transitional radii (R1, R2) is recessed into the cheeks (W1, W2).

## Revendications

1. Dispositif de trempe d'un point d'appui cylindrique (L) d'un arbre (K), sur lequel un des rayons de transition au moins (R1, R2) des parties d'arbre (W1, W2) adjacentes est réalisé en dépouille,
■ avec une paire d'unités de chauffage (1,2) travaillant de manière inductive, constituées chacune d'un inducteur (3,4) au moins, comportant deux branches d'élément chauffant (20, 22 ; 21, 23) disposées à distance l'une par rapport à l'autre et longeant chacune le point d'appui (L) dans le sens circonférenciel (U), et reliée à une alimentation de courant (5, 6),
■ une branche d'élément chauffant extérieur (20) de l'inducteur (4) de l'une des unités de chauffage (2) étant affectée au premier rayon de transition (R1) et une branche d'élément chauffant extérieur (21) de l'inducteur (3) de l'autre unité de chauffage (1) étant affectée au deuxième rayon de transition (R2), alors que les branches intérieures d'élément chauffant (22, 23) des inducteurs (3, 4) sont chacune disposées de manière contiguë l'une à l'autre,
■ avec un premier positionneur (11, 12) prévu pour placer les inducteurs (3, 4) simultanément depuis un sens radial (R) sur le point d'appui (L) à tremper, jusqu'à ce que les inducteurs (3, 4) reposent sur ledit point d'appui (L),
■ les branches d'élément chauffant (20, 23) enveloppant dans cette situation le point d'appui (L) du moins partiellement,
■ les branches intérieures d'élément chauffant (22, 23) des deux inducteurs (3, 4) se recouvrant mutuellement dans une zone de recouvrement (B), considérée dans le sens circonférenciel (U), sans toutefois se toucher,
■ et avec un deuxième positionneur (13, 14) prévu pour déplacer au moins l'inducteur (3, 4) affecté au rayon dépouillé (R1, R2) suite au placement sur le point d'appui (L), en faisant un mouvement (A) axial parallèle par rapport à l'axe longitudinal (X) de l'arbre (K) et ce, dans le sens du rayon de transition dépouillé (R1, R2), jusqu'à ce que sa branche extérieure d'élément chauffant (20) s'est introduit dans le rayon de transition respectif (R1, R2).

2. Dispositif selon la revendication 1, **caractérisé en ce que** chacune des unités de chauffage (1,2) est équipée d'une alimentation électrique (5, 6).

3. Dispositif selon la revendication 1, **caractérisé en ce que** la largeur de la zone de recouvrement (B) mesurée dans le sens axial de l'arbre (K) est supérieure à la somme des profondeurs (t1, t2) des rayons de transition (R1, R2).

4. Dispositif selon l'une quelconque des revendications précédentes, **caractérisé en ce que** les inducteurs (3, 4) enveloppent le point d'appui (L) à tremper de plus de 90 °.

5. Dispositif selon la revendication 4, **caractérisé en ce que** les inducteurs (3, 4) enveloppent le point d'appui (L) de plus de 140 °.

6. Dispositif selon l'une quelconque des revendications précédentes, **caractérisé en ce que** les branches intérieures d'élément chauffant (22,23) sont disposées en oblique, rapporté aux branches extérieures d'élément chauffant (20, 21).

7. Dispositif selon l'une quelconque des revendications précédentes, **caractérisé en ce que** les branches intérieures d'élément chauffant (22, 23) sont plus courtes que les branches d'élément chauffant extérieures (20, 21) des inducteurs (3, 4).

8. Dispositif selon l'une quelconque des revendications précédentes, **caractérisé en ce que** les branches d'élément chauffant (20-23) sont chacune subdivisées en deux éléments (20a, 20b).

9. Dispositif selon l'une quelconque des revendications précédentes, **caractérisé en ce que** les unités de chauffage (1, 2) supportent un outil de trempe au moins.

10. Dispositif selon l'une quelconque des revendications précédentes, **caractérisé en ce que** le positionneur (11, 12) dont l'effet se fait dans le sens radial (R) est prévu pour déplacer les unités de chauffage (1,2) et les inducteurs (3, 4), dans leur ensemble.

11. Dispositif selon l'une quelconque des revendications précédentes, **caractérisé en ce que** le positionneur (13, 14) dont l'effet se fait dans le sens axial est prévu pour déplacer les unités de chauffage (1,2) et les inducteurs (3, 4), dans leur ensemble.

12. Utilisation d'un dispositif selon les revendications 1 à 11, en vue de la trempe des tourillons de course d'un vilebrequin (K) délimités latéralement par des faces (W1, W2), où un des rayons de transition (R1, R2) au moins est dépouillé dans lesdites faces (W1, W2).
